# EUROPEAN PATENT APPLICATION

(11) **EP 1 107 107 A1**
(43) Date of publication of application: **13.06.2001**
(21) Application number: 99204181.4
(22) Date of filing: 10.12.1999
(51) Int. Cl.: G06F 7/00

(54) **Parallel data processing and shuffling**

(71) Applicant: Koninklijke Philips Electronics N.V., 5621 BA Eindhoven (NL)
(72) Inventor: The designation of the inventor has not yet been filed
(74) Representative: Steenbeek, Leonardus Johannes

(57) **Abstract**

The invention provides a parallel data processing device having an array of parallel processing elements (LPA1...320) for processing a signal to obtain parallel streams of data, and means (TSMM1...80) for shuffling the parallel streams of data in a block-wise manner. The data shuffling means (TSMM1...80) have an array of addressable switch memory matrices (TSMM1...80) which are each coupled to a predetermined number of processing elements (LPA1...320). The array of switch memory matrices (TSMM1...80) solves data flow limitations of highly parallel linear array processors as well as intermediate storage requirements of image processing algorithms. In a camera system the parallel data processing device is combined with a sensor array (S).

## Description

The invention relates to a device, a method and a camera system in which a signal is processed in an array of processing elements to obtain parallel streams of data.

The MAPP2200 Product information, IVP Integrated Vision Products AB, Teknikringen 2C, SE-583 30 Linkoping, Sweden describes a combination of a sensor and a general purpose image processor on the same semiconductor chip. This is a two dimensional Smart Vision Sensor containing a full matrix of 256x256 sensors and 256 processor units. The built-in processor array handles a full row of pixels in parallel. An A/D conversion is performed in parallel on the grey levels of an entire image line. All pixels in an image row or an addressed register are processed simultaneously. The parallel operations are performed bitwise on the image registers. The result of a computation is stored in the Accumulator or, if the instruction is an arithmetic instruction also in the Carry register. The content of these registers can be moved to a memory register, serve as the second operand of the next instruction, or be accessed from the controller via the status register. This prior art sensor is used for object recognition and is not suitable for video communication. The prior art sensor does not disclose a parallel implementation of a sensor for color images, which are desirable for video communication.

An object of the invention is to enhance a flexibility of parallel data processing. To this end, the invention provides a device, a camera system and a method as defined in the independent claims. Advantageous embodiments are defined in the dependent claims.

A first embodiment of the invention is characterized in that the device further comprises means for shuffling the parallel streams of data in a block-wise manner.

In highly parallel processing, flexibility, especially in terms of data flow, is significantly constrained. The invention provides block level computing as is used widely in video processing devices combined with parallel data processing.

In a practical embodiment, the data shuffling means comprise an array of addressable switch memory matrices which are each coupled to a predetermined number of processing elements. The switch memory matrices are able to shuffle the data in a block-wise manner. Because the switch memories are arranged in parallel, control is very efficient.

The invention further provides a camera system comprising a sensor and a device according to the invention. The camera system is preferably applied for video communication. Video communication applications require nowadays a reasonable amount of block level calculations for e.g. compression. The invention provides an extension of a highly parallel architecture to make e.g. block level calculations possible.

The aforementioned and other aspects of the invention will be apparent from and elucidated with reference to the embodiments described hereinafter.

In the drawings:
Fig. 1 shows a camera system with a highly parallel processing architecture and data shuffling means according to the invention;
Fig. 2 shows a color filter array;
Fig. 3 shows an architecture of a linear processing array according to the invention;
Fig. 4 shows a data shuffling means architecture according to the invention;
Figs. 5 to 8 show different modes of operation of the data shuffling means of Fig. 4; and
Figs. 9 and 10 show modes of operation of the data shuffling means wherein two adjacent switch matrices have been coupled.

The drawings only show those elements that are necessary to understand the invention.

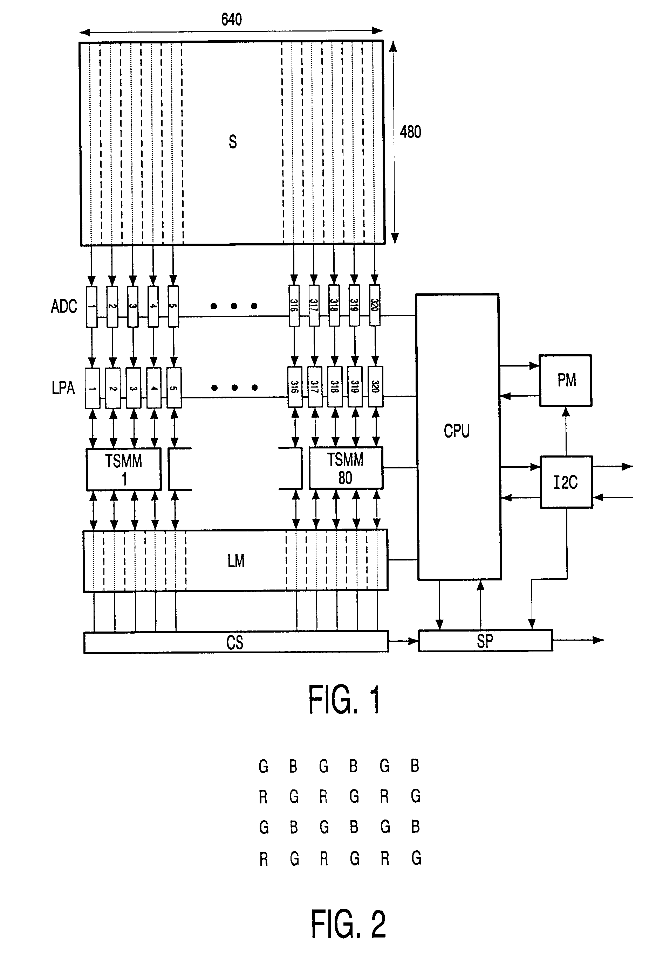

Fig. 1 shows a preferred embodiment of the invention, i.e. a camera system with a highly parallel processing architecture and data shuffling means according to the invention. The camera system comprises an image sensor array S with a parallel Analog to Digital Converter (ADC 1...320). The ADC is coupled to a Linear Processor Array (LPA 1...320) and a Line Memory (LM). The various parts of the camera system are controlled by a Central Processing Unit (CPU). The camera system preferably uses CMOS imaging where solid state CMOS sensors and digital signal processing (DSP) are integrated on a single IC chip.

Without the data shuffling means, the embodiment of Fig. 1 is already capable of performing pixel level image processing and filtering, such as dead pixel substitution, auto whitening, auto exposure control.

However, a high level of parallelism results in little flexibility to perform more complex block level algorithms, such as DCT and zigzag scan. The invention therefore provides an extension of a highly parallel architecture, enabling the signal-processing device to efficiently perform block level operations including separable recursive Discrete Cosine Transform (DCT), chrominance sub-sampling, and Zig Zag (ZZ) scan. Hereto, the camera system has been enhanced with means for shuffling data in a block-wise manner. The data shuffling means (TSMM1...80) are coupled to the LPA and the line memory LM. In a practical embodiment, these data shuffling means comprise an array of transpose switch memory matrices (TSMMs). The TSMM is an additional block level memory unit to the original architecture. The TSMM is designed to enhance data flow between the processing elements and the line memory LM. They can be considered as an extension of the line memory LM with added functionality. The TSMM ties processing elements together and enables storage and communication between them. In a further embodiment, the TSMM binds an adjacent TSMM and enables transfer of data to an adjacent TSMM. Other advantages are that the TSMM transposes data and enables access to the outputs of four processors, i.e. block wise random addressing. Because the TSMMs are each coupled to 4 processor elements, the total number of TSMMs in this embodiment is 80.

Because of massively parallel architecture, not only high computational performances are achieved, but also with favorable power consumption. Data bandwidth of on-chip memories is not limited by the number of I/O pins as the off-chip memory counterparts. Data bandwidth limitations may result from access latency requirements or cross-talk but these issues may be alleviated by reducing clocking requirements of the memory units. This is done with sufficient parallelism and with proper architecture design. With a sufficient low clock rate, the operating voltage may be lowered to achieve further power savings. A major reduction in power consumption stems from the principle that the data is obtained in parallel from the line memory LM. Memory accesses consumes a large portion of power in sequential processors. In a sequential processor, one needs a certain number of accesses to memory per pixel to run an algorithm. First, in the LPA the number of accesses per pixel is reduced simply since multiple calculations can be done having all the pixel values available at once with a single read/write action. Second, the line memories LM are a factor of 3 more power efficient than comparable access to pixel memories. Part of the power efficiency further comes from the parallel implementation of the ADC and LPA. Although it will not matter for the computational power whether calculations are performed in sequence or parallel, power is considerably reduced by low-speed shared items such as control decoding and instruction fetch.

The camera system is applicable to Electronic Still Picture (ESP/DSC), digital video camcorders, desk-top video cameras, video-phones, surveillance, etc. These products are all characterized by low cost and a high level of integration. Some of the applications also demand the low energy consumption. The embodiment supports typical signal processing tasks as: analog to digital conversion (ADC), image enhancement and transformations as well as numerous control functions such as white-balancing and exposure time control.

There are in fact two programmable digital processors: the CPU for line-based algorithms and the Linear Processor Array (LPA 1...320) for pixel-based algorithms. Both processors obtain their instructions from a program memory (PM). Non-programmable processors and controllers may be used to provide row and column address selectors, an ADC controller, an I2C control processor and a Serial Processor (SP). These processors may accept parameters from the CPU for sub-sampling, region-of-interest selection, mirroring, gain, black-level, gamma and video output format. The Serial Processor is coupled to the line memory LM via a Column Selector (CS).

The image sensor S may be a VGA (640 by 480) matrix of active pixels. After a pixel has been reset by applying a certain voltage to its capacitor, incoming light will start reducing this charge. Following a certain exposure time, the residual voltage on the capacitor is read which reflects the illumination or "pixel-value". Exposure time is controlled by the delay between reset and read-out of the pixel. The sensor can be seen as a large analog memory with the image rows as random addressable words. This means that although all pixels within a whole row (i.e. 640) are read out simultaneously, random selection of a region-of-interest (ROI) is still possible.

The pixels may be overlaid with an optical color filter array as shown in Fig. 2. This filter assigns either a red (R), green (G) or blue (B) sensitivity to each individual pixel. One row in the filter array contains two alternating different colors. Because only one color is processed per clock cycle, it is advantageous to share two columns, which correspond to different colors, per processing element. The parallel processor array LPA therefore consists of 320 preferably identical processing elements, i.e. one processing element for every two columns. The way of sharing columns, which correspond to different colors, depends on the color filter that is applied. When for example, a color filter provides three different colors in a row, three columns may be shared per processing element.

Since the CMOS sensor is read out on row basis, a parallel ADC is favorable. All columns are converted simultaneously. Because of the low sampling rate, the facts that a common part can be shared for all ADCs and that a fixed offset may be allowed, the parallel ADC can be designed very power efficient when compared to video-speed ADCs. In the ADC, each column has a comparator, which enables a set of latches in which the output value is to be stored. An input of each comparator is connected to the signal to be digitized. The input signal remains stable while at the other comparator input, a ramp signal is applied from a global ramp generator. When the ramp signal reaches the input value, the comparator will switch and store the digital value applied to the latches at that moment. By connecting the latches to a global counter, which is somehow synchronized with the ramp generator, the switching time can be mapped (and thus the analog input value) onto a digital value and be stored in the latches. A disadvantage of the parallel ADC is that parameter spread causes a difference in response between columns for equal intensities. This shows itself as a column-based "Fixed-Pattern Noise" (FPN) in the image signal. This column FPN is estimated by an initialization program and stored in one of the line memories for cancellation in normal running mode. The pixel-level FPN is corrected by the well-known method of double sampling for which analog subtraction is integrated in the ADC. Because of the color filter array, two columns can share one ADC element. In this way, analog multiplexing takes place. When digital multiplexing is desired, one ADC per column is needed.

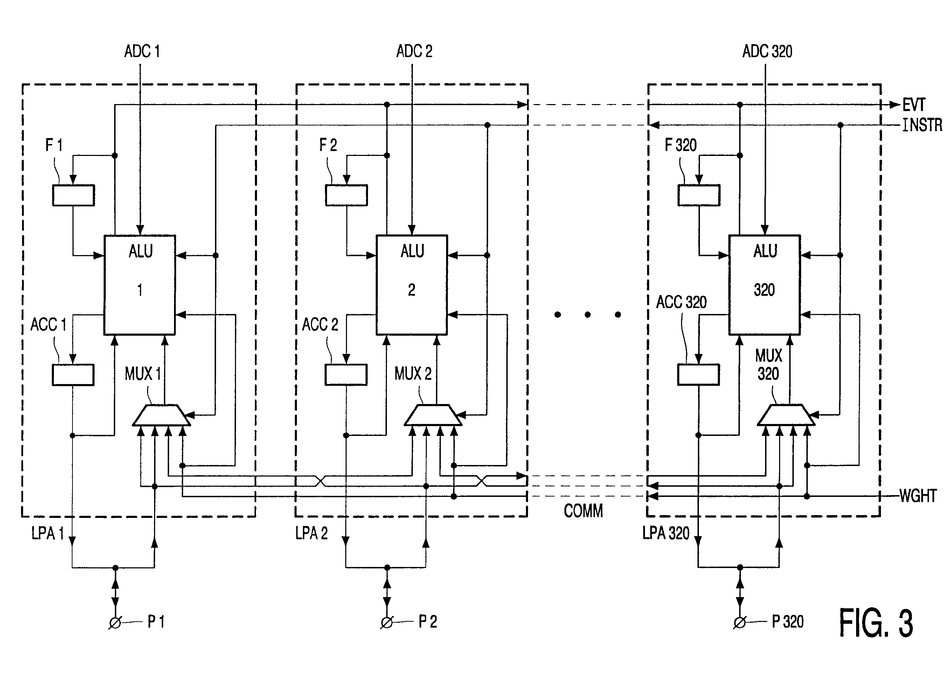

Fig. 3 shows a practical implementation of a processor array LPA 1...320. By left and right communication channels COMM and multiplexers MUX1...320, each processing element can directly obtain data from six columns. The data read from the line memory LM or a given TSMM can be redirected to the corresponding processing element or to the processing element at the left or the right thus providing limited communication between processing elements LPA1...320. One word of data can be shifted to the neighboring processing elements in a given clock cycle. All processing elements are running identical instructions on their local data. Again, power consumption is reduced compared to a sequential column processor, because the control and address-decoding is performed only once and shared by all processing elements according to a Single Instruction Multiple Data (SIMD) principle. Each processor comprises an accumulator ACC1...320 that stores the latest result, which can be used as an operand for a next instruction. Both an adder and a multiplier are implemented in the ALU1...320 and with these functions comparison, addition, subtraction, data weighing and multiply-accumulate are performed. The processors incorporate a flag F that is set according to the latest result. Based on this flag F conditional pass-instructions are possible, allowing a limited form of data-dependency in the algorithms. All 320 flags F1...F320 are connected to a global line EVT, which is coupled to the CPU. In this way, iteration processes with a certain end-condition can be run on the parallel processor array LPA, or the CPU can react on image contents. The CPU therefore provides a control signal INSTR. Resulting data becomes available at points P1...P4. Data from the line memory LM or from the TSMM coupled to these points P1...P4 may be used in the respective processing elements LPA1...320.

One may use the accumulator ACC, the memory LM content or a global weight WGHT as an operand. The weight WGHT, which is equal to all processors LPA 1...320, is used to scale the data in the multiplication and the multiply-accumulate instructions. The weight WGHT may be provided by the CPU.

Tasks that the parallel processor LPA may be used for include: fixed pattern noise reduction, defective pixel concealment, noise reduction, color reconstruction and color-domain transformation, including pre-filtering for sub-sampling purposes.

By using a dual-port principle for the line-memories LM, in one instruction-cycle, operands can be read from memory and results can be written back at desired locations. In a practical embodiment, the Line Memory (LM) comprises 16 line memories for temporary data storage. Further, an additional three lines are used as write-only memories for lining up final results of the calculations.

The CPU is in charge of the entire chip. Its main task is to keep the program counter, to fetch and decode instructions and pass them to the LPA. Besides that, it can do global calculations for exposure-time control, white-balancing and such. It uses the statistical image data, which is updated (by the serial processor SP), in internal registers. A number of logical and arithmetic instructions are available including multiplication. For program control, the CPU handles (conditional) jumps in a program and therefore houses a number of (program) counters. In addition, the CPU can react on events generated by the parallel processor LPA, and jump to different subroutines. Certain registers of the CPU are accessible through I2C and therefore give a way of communication to and from an end user. For instance, a region of interest can be specified to the CPU, which then addresses the selected rows and columns for processing. The program memory PM holds the instructions for the CPU. Note that this memory PM also holds instructions to the parallel processor LPA. The instructions are decoded and then either the LPA or CPU is invoked. This sequential instruction fetch facilitates programming the combination of the two processors from one program.

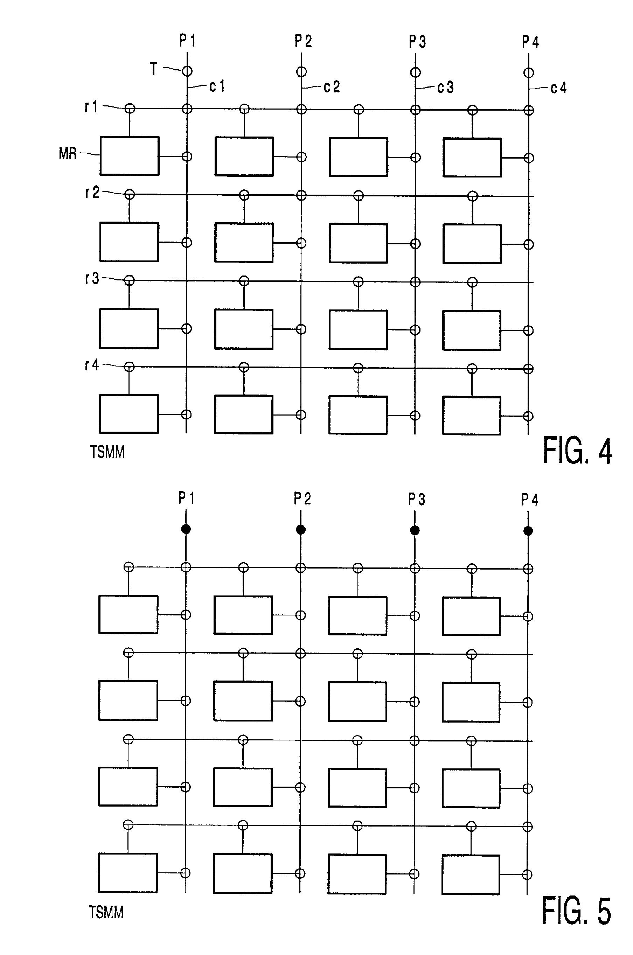

Preferably, the TSMM comprises of a semi-connected crossbar switch superimposed on a matrix of registers. The proposed architecture of the TSMM is depicted in Fig. 4. Rectangles MR represent registers in the memory matrix. The TSMM further comprises controllable switches T represented by circles. A filled circle means that the switch is closed and conducting. An open circle means that the switch is open and non-conducting. The TSMM may be globally addressed and accessed independently of the line memory. In the drawing, a matrix of 4 by 4 registers is given by way of example. Because the processing elements are coupled to two columns of the sensor array, the TSMM is effectively coupled to eight columns in the sensor array. In this embodiment, one TSMM is effectively arranged for processing a block of 8 by 4 pixels. In a practical embodiment, eight buses, four in horizontal (rl...r4) and four in vertical direction (cl...c4) that form the crossbar switch are 16 bits wide. The buses are coupled to the processing elements LPA, the line memory LM, adjacent TSMMs as well as the registers MR of the matrix. Further, switches T are placed at the crossings of the horizontal (rl...r4) and vertical buses (cl...c4) to control the data flow between the connected units. Although a switch may be placed on every crossing, a number of seven switches placed on crossings as shown in Fig. 4 is preferred in this embodiment. In addition, every register MR is connected to the corresponding horizontal (rl...r4) and vertical bus (cl...c4) gated by two switches T. Data can flow to and from the registers MR through either the horizontal or the vertical buses.

The register matrix can be interpreted as four columns (c1...c4) of four registers MR where each column corresponds to a particular processing element LPA1...320. A processing element has limited access to other columns within the TSMM. The embodiment according to the invention provides the following data flow configurations: line memory access, register access, transpose read/ write, processing element selective read/ write, longitudinal block transfer. These configurations are discussed below.

Fig. 5 shows a data pass through mode. The switches T at P1 ... P4 are closed, which results in a direct data path to the line memory. The TSMM is transparent to the processor LPA and the line memories MEM. No data is stored in the registers MR because all switches connected to the registers are open.

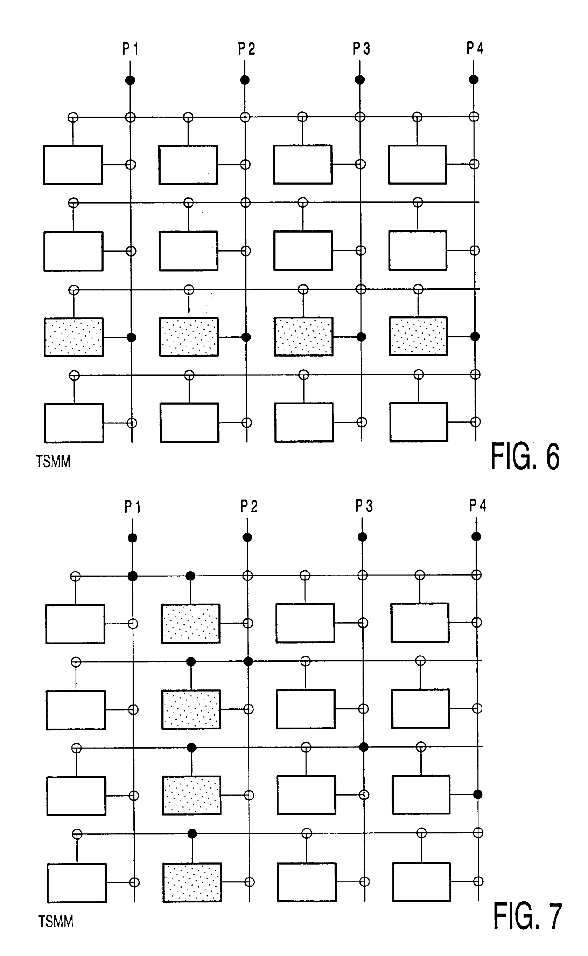

Fig. 6 shows a register access mode. In this mode, the TSMM is used for temporary storage. Data can be read from and written to the memory registers. As in Fig. 5, the switches at P1...P4 are closed. Furthermore, the switches T of the registers of the third row coupled to the respective columns are also closed. In this way, an entire row is read or written in a word-like fashion in the third register row. The four columns are mutually exclusive. A column in the TSMM is associated with and can be directly accessed only by the corresponding processing element. The TSMM can be used for temporary storage similar to storage in the line memory LM. An advantage of the TSMM over the LM is that the TSMM is much closer to the LPA and may run at a lower clock rate than the LM. Localization of the memory may be more power efficient.

Fig. 7 shows a transpose read mode. Data stored in the TSMM is read column-wise and routed to the vertical buses by closing the appropriate switches T to output a horizontal word back to the processing elements. Transpose reading (and writing if applied in opposite direction) of the TSMM is herewith achieved.

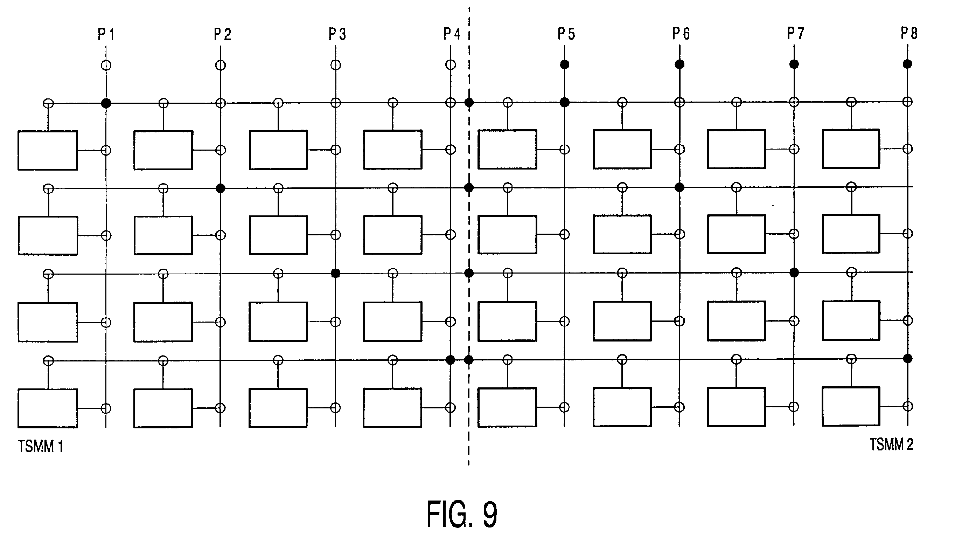

Fig. 9 shows a processor selective access mode. This figure shows the ability of using the TSMM to randomly access one of the four outputs of the processor and store the output randomly in one of the four registers of a column of the TSMM. As an example, the switch T at P2 is closed, therefore only allowing the data from LPA2 to enter the TSMM. By activating appropriate switches T, this data is routed to the fourth register MR in the first column of the TSMM. In this way, an output from the LPA2 is written in the fourth register of the first column cl of the TSMM. Reading by a processing element from the TSMM will cause problems because the LPA1...320 are not individually selectable. All processing elements will then try to read and perform some processing with uncertain results. When the accumulators of the LPA1...320 are selectively addressable, this problem is effectively solved.

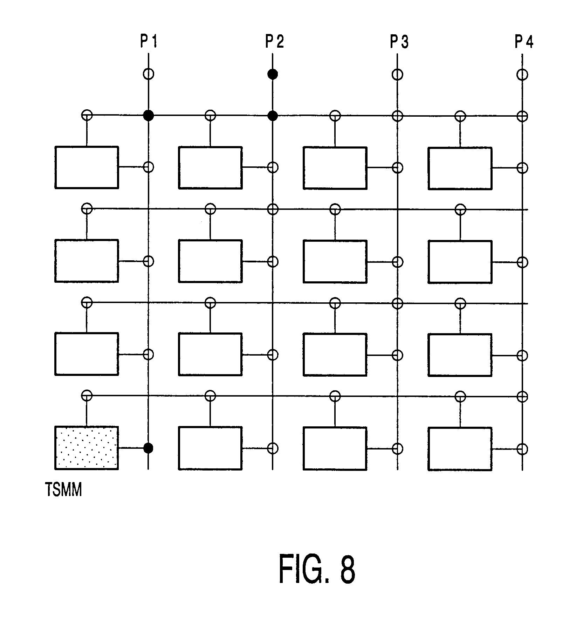

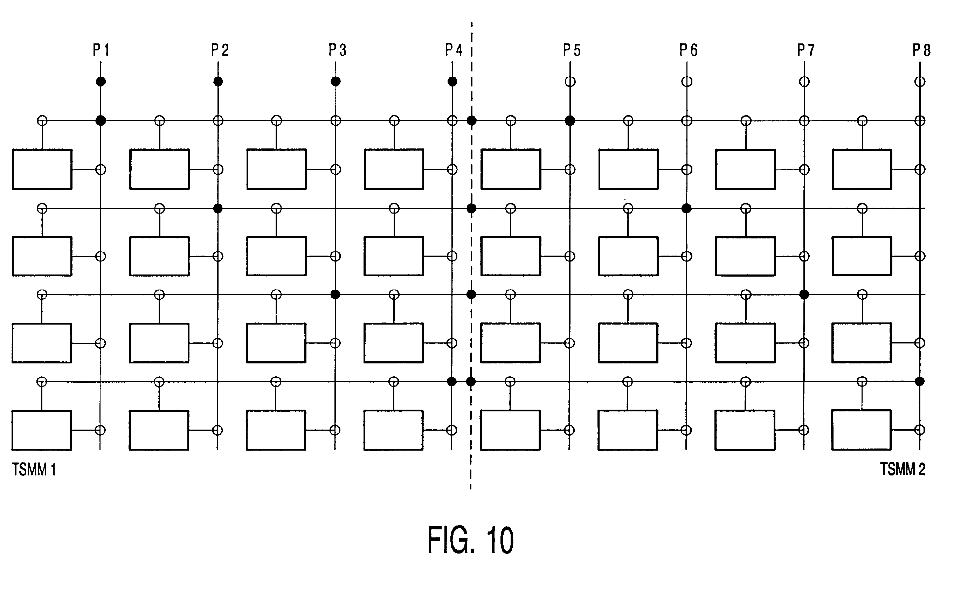

Figs. 9 and 10 show block transfer modes. In these modes TSMMs are coupled two by two to each other. In this way, the camera system of Fig. 1 comprises an array of 40 parallel double TSMMs. Figs. 9 and 10 show possible modes for transferring data from one block to an adjacent block. Note that in order to allow transfer of data, switches T (here also called transmission gates) are required between the TSMMs to make the flow of data on the same horizontal bus to an adjacent TSMM possible. Fig 9 shows a block transfer from top to left of the TSMM2. Switches T on the crossings of the horizontal and vertical buses are activated in such a way that a row from the processing elements coupled to P5...P8 is transferred column-wise to the left. The transmission gates T allow this data to enter the TSMM1. Switches T on the crossings of the horizontal and vertical buses of TSMM are activated such that the column of data becomes available in a row-wise fashion in the TSMM1. Data from the processing elements coupled to the TSMM2 thus becomes available in the TSMM1 as if the data was coming from the processing elements coupled to the TSMM1. Fig. 10 shows a block transfer mode, wherein a row in the TSMM 1 is transferred to the TSMM2. This mode is comparable to the mode presented in Fig. 9, but in opposite direction. Instead of data from the processing elements, the modes presented in Figs. 9 and 10 are also applicable to data obtained from the line memories LM. Because the data from the line memory LM enters at the bottom of the TSMMs, the switches at P1 to P8 are not used in that case. Similar reading problems may occur as described above in relation to Fig. 8 because of the massively parallel architecture of the LPA. Also in this case, it is preferred to have selectively addressable LPA accumulators when the LPA has to read data. Although Figs. 9 and 10 give an illustration concerning TSMM1 and TSMM2, the same is true for other coupled TSMMs, e.g. TSMM3 + TSMM4 etc.

The various modes of operation described above enable the device to perform various algorithms, e.g. recursive or matrix Discrete Cosine Transform (DCT), chrominance sub-sampling and Zig Zag (ZZ) scan in an efficient way. These features will be discussed below.

Block DCT is applied to four Y blocks, one U and one V block of each macroblock. A preferable algorithm is a separable two-dimensional recursive DCT algorithm as known from Aburdene et al., "Computation of discrete cosine transform using Clenshaw's recurrence formula", *IEEE Signal Processing Letters,* 2(8), pp. 155-156, Aug 1995. The input to the DCT algorithm is a sequence of 8 pixels taken from a column of a block and two weights. The weights determine the ordinate of the resulting DCT coefficient. Since each block is serviced by four processing elements, four DCT coefficients are processed in parallel. Sixteen passes of the DCT algorithm are needed to compute the vertical one-dimensional DCT and another sixteen passes are required to compute the horizontal one-dimensional DCT for a complete block DCT. The recursive DCT algorithm is favorable to minimize the area required for intermediate storage. Two intermediate variables are required to process one DCT coefficient. Butterfly DCT algorithms that are faster, require eight intermediate variables for each processing element. Since intermediate variables require high precision, it would require more area to integrate them into pixel buffers such as the line memory LM. The TSMM provides four high precision intermediate registers MR for each processing element. Because only two are needed to compute the DCT coefficient, two registers may be used for other purposes. More importantly, DCT coefficients stored in the TSMM can be transposed (see Fig. 7). Transposition is needed for performing the recursive DCT algorithm horizontally.

For the proposed architecture, a four by four TSMM is preferred. First, it is less than a quarter of the area of a full eight by eight transpose matrix, because a full eight by eight transpose matrix has more addressing overhead. Second, the processing elements generate only four DCT coefficients while the line memory stores only four DCT coefficients.

The block transfer modes (see Figs. 9 and 10) offer efficient modes for chrominance sub-sampling. RGB-YUV conversion is performed prior to sub-sampling of the chrominance components in the 4:2:2 format. RGB-YUV conversion by itself is a pixel level operation and involves multiplication of constant weights and accumulation of the products. Once the pixel is converted to the YUV domain, the U and V components are sub-sampled by a factor 2 both horizontally and vertically. A fundamental problem exists in the memory allocation for storing the U and V components. In the 4:2:2 format, the U and V component in a macroblock of 16x16 pixels is sub-sampled to 8x8 pixels and the Y component is not sub-sampled. A macroblock spans two blocks (two 8 pixel columns), i.e. two TSMM units or 8 processing elements. If the sub-sampled blocks were stored directly into the corresponding line memory, it would be highly inefficient to perform the horizontal DCT pass. It is much desired to store the U block on one half of the macroblock and the V block on the other. This allows the same 2-D DCT code to be applied on all Y, U and V blocks. With the block transfer mode, this takes only one direct transfer. Even if in a parallel structure, communication is possible between adjacent columns, this transfer requires four cycles of data shifting. The overhead of this embodiment compared to the embodiment of Fig. 4 is in the switches gating the data buses between the TSMMs. The block data transfer feature may be omitted if sufficient cycles remain for data shifting between processing elements or if the switches introduce capacitive loading that increases the power per line memory access. This trade-off may be evaluated for implementation.

Block level random addressing (see Fig. 8) can be used for various types of algorithms, e.g. ZZ scan. Accumulator data from one of the processing elements can be selectively addressed and written to one of the four registers in the first TSMM column. After writing to all four registers, the first TSMM column can be transposed and written to the line memory LM. Only two bits are required to address the output of the processing elements and another two bits to address the registers. ZZ scan as described in the JPEG standard can be implemented in several ways. It is essentially a reordering of data within an eight by eight block. The tradeoff between performing ZZ scan in the linear processor array LPA and outside the LPA is in the complexity of the hardware. Performing ZZ scan outside the LPA would require a block buffer to ensure that there is sufficient data for reordering at the specified streaming rate. Monitoring hardware will be required to keep the buffer from emptying or overflowing. Synchronization between the streaming unit and the LPA will be required introducing complexity in the LPA as well in the program. On the other hand, if ZZ scan were performed in the parallel hardware, streaming would be constant and only a run-length encoder is required.

Variable length encoding cannot be efficiently implemented in highly parallel integer ALUs without introducing higher complexity and therefore are processed outside the linear processor array.

In summary, an array of high precision, register matrices TSMMs is proposed to solve the data flow limitations of highly parallel linear array processors as well as intermediate storage requirements of image processing algorithms. This hierarchy of processor and memory units is necessary to enhance flexibility of highly parallel processing systems where flexibility, especially in terms of data flow, is significantly constrained. An array of simple, special memory units TSMMs is combined with a highly parallel pixel level processing architecture, which enables image caption and motion-JPEG video compression at video rate on a single chip.

The invention provides a parallel data processing device having an array of parallel processing elements for processing a signal to obtain parallel streams of data, and means for shuffling the parallel streams of data in a block-wise manner. The data shuffling means have an array of addressable switch memory matrices which are each coupled to a predetermined number of processing elements. The array of switch memory matrices solves data flow limitations of highly parallel linear array processors as well as intermediate storage requirements of image processing algorithms. In a camera system the parallel data processing device is combined with a sensor array.

It should be noted that the above-mentioned embodiments illustrate rather than limit the invention, and that those skilled in the art will be able to design many alternative embodiments without departing from the scope of the appended claims. Columns and rows may be interchanged without departing from the scope of the invention. In the claims, any reference signs placed between parentheses shall not be construed as limiting the claim. The word "comprising" does not exclude the presence of other elements or steps than those listed in a claim. The invention can be implemented by means of hardware comprising several distinct elements, and by means of a suitably programmed computer. In a device claim enumerating several means, several of these means can be embodied by one and the same item of hardware.

## Claims

1. A parallel data processing device comprising:
an array of parallel processing elements (LPA1...320) for processing a signal to obtain parallel streams of data, and
means (TSMM1...80) for shuffling the parallel streams of data in a block-wise manner.

2. A device as claimed in claim 1,
wherein the data shuffling means (TSMM1...80) comprise an array of addressable switch memory matrices (TSMM1...80) which are each coupled to a predetermined number of processing elements (LPA1...320).

3. A device as claimed in claim 2, wherein each switch memory matrix (TSMM1...80) comprises:
a matrix of registers (MR); and
a crossbar switch having row-wise buses (rl...4) and column-wise buses (c1...4), crossings of the row-wise buses (r1...4) and the column-wise buses (c1...4) being provided with switches (T), each register (MR) being coupled to one row-wise bus (rl...4) and one column-wise bus (c1...4) of the crossbar switch, and each column-wise bus (c1...4) being coupled to a processing element (LPA1...320).

4. A device as claimed in claim 2,
wherein each switch memory matrix (TSMM1...80) is a square matrix.

5. A device as claimed in claim 2,
wherein the switch memory matrices (TSMM1...80) are coupled two by two to each other.

6. A device as claimed in claim 2,
wherein each processing element (LPA1...320) comprises an accumulator (ACC1...320), the accumulators ACC(1...320) of the predetermined number of processing elements (LPA1...320) being selectively addressable.

7. Camera system comprising:
a sensor array (S) for obtaining a signal; and
a parallel data processing device as claimed in claim 1 for processing the signal.

8. A camera system as claimed in claim 7,
wherein the sensor array (S) is provided with a color filter array, and a number of columns of the sensor array (S) corresponding to different colors (R,G,B) are shared by a same processing element (LPA1...320).

9. A method of processing a signal, comprising the steps of:
processing the signal in an array of processing elements (LPA1...320) to obtain parallel streams of data, and
shuffling (TSMM1...80) the streams of data in a block-wise manner.
